# EUROPÄISCHE PATENTANMELDUNG

(11) **EP 0 556 766 A1**
(43) Veröffentlichungstag der Anmeldung: **25.08.1993**
(21) Anmeldenummer: 93102367.5
(22) Anmeldetag: 16.02.1993
(51) Int. Cl.: B32B 31/12, B65D 1/28, B32B 31/00

(54) **Herstellungsverfahren für eine Verbundfolie**

(30) Priorität: 21.02.1992 DE 4205249
(71) Anmelder: Hagner, Hans, D-72280 Dornstetten (DE)
(72) Erfinder: Hagner, Hans, D-72280 Dornstetten (DE)
(74) Vertreter: Frank, Gerhard, Dipl.-Phys.

(57) **Zusammenfassung**

Ein Herstellungsverfahren für eine mehrschichtige Kunststoffolie (Verbundfolie) für Verpackungszwecke sieht vor, daß streifenartige Randbereiche der Deckfolie von der Verbindung mit der Trägerfolie ausgenommen werden und in einem abschließenden Verarbeitungsschritt abgetrennt werden. Diese streifenartigen Randbereiche dienen in Verarbeitungsstationen in der Regel für Transportzwecke in Zusammenarbeit mit Transportketten oder ähnlichem. Bei der Verpackungsherstellung werden diese Randstreifen abgetrennt und sind folglich Abfall. Durch das erfindungsgemäße Verfahren wird sichergestellt, daß diese Randstreifen nur einschichtig sind und somit im Gegensatz zu Verbundfolien einfach entsorgt werden können oder Recycling-Prozessen zugeführt werden können.

## Beschreibung

Die Erfindung betrifft ein Herstellungsverfahren nach dem Oberbegriff des Patentanspruches 1.

Verbundfolien haben in der Verpackungsindustrie eine erhebliche Bedeutung, da die Anforderungen an die Folienverpackung bestimmt wird von dem jeweiligen Verpackungsgut. Da die Eigenschaften der zu einer Verbundfolie vereinigten Einzelfolien bzw. Kunststoffschichten voneinander verschieden sind, kann man durch die Anordnung und Reihenfolge der Folienschichten die gewünschten Gesamteigenschaften der Verbundfolie weitgehend derart festlegen, daß eine hinsichtlich der Eigenschaften des jeweiligen Verpackungsgutes optimierte Verpackung herstellbar wird. Beispielsweise werden PE- und PET-Folien eingesetzt.

Aus derartigen Verbundfolien können dann beispielsweise im Tiefziehverfahren Becher oder ähnliches hergestellt werden, die dann mit einer anderen Verbundfolie durch Randversiegelung verschlossen werden.

Die rationelle maschinelle Herstellung von solchen Verpackungen geht in der Regel aus von Verbundfolien, die in Rollenform vorliegen und es werden dann durch gruppenweise zusammengefaßte Tiefzieh-, Füll- und Verschließstationen die gewünschten Verpackungen vorgeformt, befüllt und verschlossen.

Diese Art der Verarbeitung erfordert einen Transportmechanismus, der die Folie an ihren beiden äußeren Rändern ergreift und durch diese Verarbeitungsstationen zuverlässig durchzieht. Hierfür sind beispielsweise bei bekannten Tiefzieh-Verpackungsmaschinen Folientransportketten im Einsatz, in die die Unterfolie (Verbundfolie, aus der der Tiefziehteil der Verpackung hergestellt wird) eingeführt wird und an beiden Seiten während des gesamten Verpackungsvorganges festgehalten wird.

Ein grundsätzliches Problem ist der bei dieser Art der industriellen Verpackungsherstellung anfallende Abfall, d.h. diejenigen Kunststoffteile, die nach Auftrennung (beispielsweise durch Ausstanzvorgänge) in die Einzelverpackungen übrig bleibt. Während man durch geschickte Wahl des Ausstanzvorganges der Einzelpackungen bei geradkantigen, quadratischen oder rechteckigen Bechern Abfälle noch vermeiden kann, sind die anfallenden Randstreifen, die zum Transport der Folienbahnen durch die Verarbeitungsstationen notwendigerweise vorhanden sein müssen, in jedem Fall Abfall.

Bei der Verwendung von Verbundfolien hat dies die unangenehme Folge, daß die Vorteile der Verbundfolie für die Verpackung als solche schwerwiegende Nachteile bei der Entsorgung von Verbundfolien-Abfällen mit sich bringt, dadurch, daß eine Auftrennung der Verbundfolie in die materialmäßig unterschiedlichen Einzelfolien nicht mehr möglich ist und somit eine wünschenswerte Entsorgung von Stoffen gleicher Materialbeschaffenheit nicht möglich ist (vergleiche hierzu Günther Kühne "Verpacken mit Kunststoffen", Carl Hanser Verlag München 1974, Seite 266,267).

Da das Problem der Entsorgung von Verpackungsabfall immer dringender wird, stellen diese Verbundfolien-Randstreifen, die zur industriellen Herstellung der Verpackung unverzichtbar sind, ein zunehmendes Entsorgungsproblem dar.

Es ist daher Aufgabe der Erfindung, ein Herstellungsverfahren für eine Verbundfolie anzugeben, das eine einfache und kostengünstige Entsorgung der entstehenden Randstreifen nach dem Durchlauf der Verpackungsstationen erlaubt.

Erfindungsgemäß wird diese Aufgabe gemäß dem kennzeichnenden Teil des Patentanspruches 1 gelöst.

Der Grundgedanke der Erfindung besteht demnach darin, eine Verbundfolie herzustellen, bei der die Deckfolie in einem vorgebbaren Abstand vor dem Längsrand der Trägerfolie endet, oder mit anderen Worten, bei der die in den Verpackungsmaschinen als Spannränder und Transportränder benötigten Randstreifen nur aus einer Folie bestehen, zweckmäßigerweise der mechanisch stabileren Trägerfolie.

Die Vermeidung des Haftvermittlerauftrages in diesen Randbereichen der Verbundfolie schafft somit die Voraussetzungen für die Abtrennung der nicht verbundenen Randbereiche der Deckfolie beim Hersteller, so daß der Verarbeiter als Abfallprodukt nach Durchlaufen sämtlicher Verpackungsstationen lediglich die Spannrand-Streifen der Trägerfolie hat; da somit in diesen Randbereichen die beiden Einzelfolien getrennt bleiben, können sie auch ohne weiteres entsorgt oder Recyclingprozessen zugeführt werden, d.h., sie können jeweils wieder zur Herstellung von neuen Folien verwendet werden, was bei Verbundfolien eben nicht möglich ist.

Dem Verpackungshersteller kann hierbei die Möglichkeit eröffnet werden, die bei der Verpackungsherstellung anfallenden Randstreifen der Trägerfolie zu sammeln und dem Folienhersteller zur Wiederverwertung zurückzugeben.

Das erfindungsgemäße Verfahren ermöglicht somit die Entsorgung bzw. das Recycling von Abfällen bei der Verpackungsherstellung auch beim Einsatz von Verbundfolien.

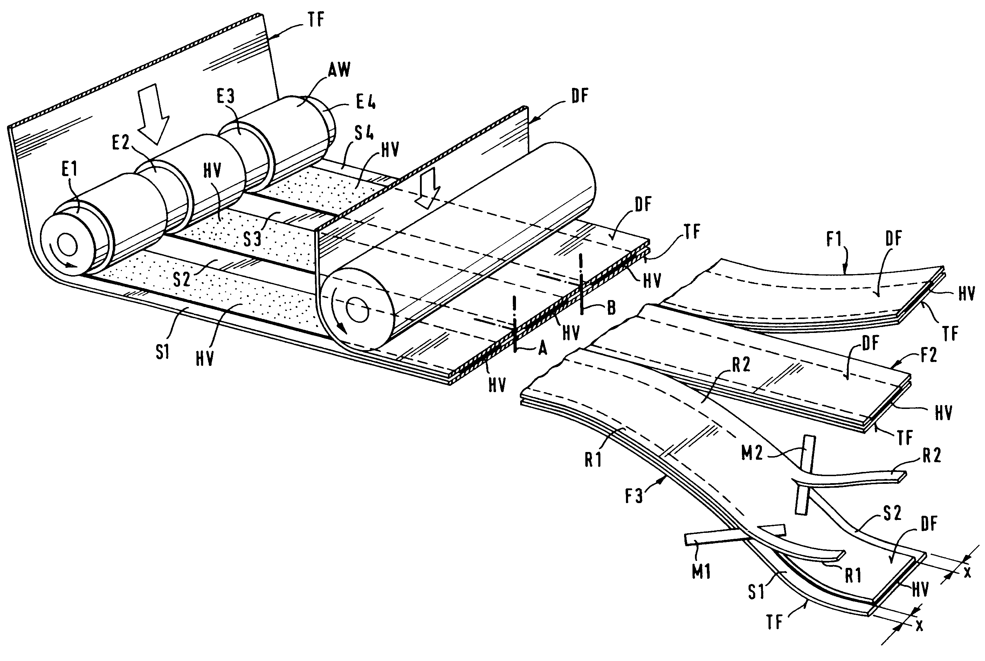

Das erfindungsgemäße Herstellungsverfahren wird nun anhand der Zeichnung in seinem Ablauf noch kurz erläutert.

Die Zeichnung stellt eine perspektivische Skizze der wesentlichen Verarbeitungsstationen dar und soll zur Veranschaulichung des Verfahrensablaufs dienen. Die bekannten Verfahren zur Herstellung von Verbundfolien (Gießverfahren, Kalandrierverfahren, Extrusionsverfahren) und die hierfür marktgängigen Maschinen können ohne weiteres zur Durchführung des erfindungsgemäßen Herstellungsverfahrens modifiziert werden, so daß auf eine Detailbeschreibung verzichtet werden kann.

Dargestellt in der Perspektivskizze ist die Bildung einer Verbundfolie aus einer Trägerfolie TF und einer mit dieser über einen Haftvermittler HV verbundenen Deckfolie DF. Wie bei der Folienherstellung üblich, weisen die in handelsüblichen Maschinen hergestellten Folien eine bestimmte Standardbreite (z.B. 1,20 m) auf. Die vom Hersteller benötigte Folienbreite wird dann durch Auftrennung der Folie beim Folienhersteller (Schnittstellen A und B in der Skizze) erzeugt, beim dargestellten Ausführungsbeispiel entstehen somit drei Verbundfolienbahnen F1,F2,F3.

Entscheidend bei der erfindungsgemäßen Konzeption ist, daß der für die Herstellung der Verbindung zwischen Trägerfolie TF und Deckfolie DF benötigte Haftvermittler HV nicht vollflächig aufgetragen wird, sondern daß streifenartige Bereiche S1,S2,S3,S4 vom Auftrag des Haftvermittlers HV ausgespart bleiben. Diese Streifen S1...S4 sind genauso gewählt, daß bei der vorgesehenen Aufteilung der Gesamtfolie in die einzelnen Verbundfolien F1,F2,F3 jede dieser drei Verbundfolien Randbereiche aufweist, in denen Tiefziehfolie TF und Deckfolie DF nicht miteinander verbunden sind.

Apparativ läßt sich dies beispielsweise dadurch erreichen, daß eine Auftragwalze AW (auch als Formatwalze zu bezeichnen), die zum Auftrag des Haftvermittlers HV auf die Trägerfolie TF dient, rinnenartige Profilierungen E1,E2,E3,E4 aufweist, deren Breite entsprechend der beabsichtigten Breite der haftvermittler-freien Randstreifen S1...S4 gewählt ist.

Bei diesem Verfahren entsprechen dann den streifenartigen Bereichen S1...S4 beispielsweise Randstreifen R1,R2 der Verbundfolie F3, wobei die Breite des Randstreifens R2 die Hälfte der Breite des Streifens S2 beträgt.

Die Verbundfolie F3 weist folglich an ihren Längsrändern gegenüberliegende Randstreifen bzw. Randbereiche S1/R1 und S2/R2 auf, die nicht miteinander verbunden sind.

In einem weiteren Verfahrensschritt werden nun die Randstreifen R1,R2 der Deckfolie DF abgetrennt, wozu beispielsweise beidseitig der Folienbahn Messer M1,M2 verwendet werden können, die stationär gehalten sein können und beim Folienvorschub die Randstreifen R1,R2 abtrennen.

Verfahrensprodukt ist folglich eine Verbundfolie, bei der eine der Folien (im Ausführungsbeispiel die Trägerfolie TF) seitlich um ein Maß x übersteht, das zweckmäßigerweise nach den Anforderungen des Verpackungsherstellers gewählt ist, insbesondere im Hinblick auf die Funktion der Randbereiche S1,S2 der Trägerfolie TF als Spannrand beim Durchlaufen einer Verpackungsmaschine.

## Patentansprüche

1. Herstellungsverfahren für eine mehrschichtige Kunststoffolie (Verbundfolie) für Verpackungszwecke, bei dem eine Trägerfolie mit einer Schichtfolie unterschiedlichen Materials unter Verwendung eines Haftvermittlers miteinander verbunden wird, gekennzeichnet durch folgende Verfahrensschritte:
a) der Haftvermittler (HV) wird auf eine der Folien (Trägerfolie TF) derart angebracht, daß mindestens zwei in Verarbeitungsrichtung parallel liegende, streifenartige Bereiche (S1...S4) vom Haftvermittlerauftrag ausgespart werden,
b) die derart beschichtete Trägerfolie (TF) wird mit der anderen Folie (DF) verbunden und der Haftvermittler (HV) aushärten lassen,
c) die mit der Trägerfolie (TF) nicht verbundenen, streifenartigen Randbereiche der Deckfolie (DF) werden abgetrennt.

2. Herstellungsverfahren nach Anspruch 1, dadurch gekennzeichnet, daß zur Herstellung von mindestens zwei Verbundfolienbahnen (F1,F2,F3) die streifenartigen Randbereiche (R), die beim Haftvermittlerauftrag ausgespart werden, beidseitig der vorgesehenen Trennlinien (A,B) der Verbundfolienbahnen (F1,F2,F3) angeordnet werden, und daß nach der Aufteilung in die einzelnen Verbundfolienbahnen (F1,F2,F3) die Abtrennung der dann randseitigen Bereiche (R1,R2) der nicht verbundenen Deckfolie (DF) erfolgt.

3. Herstellungsverfahren nach Anspruch 1 oder 2, dadurch gekennzeichnet, daß zur Aufbringung des Haftvermittlers (HV) eine Auftragswalze (AW) verwendet wird, deren Oberfläche derart senkrecht zur Umfangsrichtung profiliert ist, daß rinnenartige Vertiefungen (E1...E4) entstehen, die die vom Haftvermittler (HV) auszusparenden, streifenartigen Bereiche (S1...S4) der Trägerfolie (TF) festlegen.

4. Herstellungsverfahren nach Anspruch 1 oder 2, dadurch gekennzeichnet, daß zur Abtrennung der streifenartigen Bereiche (R1,R2) der Deckfolie (DF) mindestens ein parallel zur Folienebene liegendes Messer (M1,M2) verwendet wird, das in den Randbereich der beiden Folien (TF,DF) zwischen diesen und durch die Deckfolie (DF) hindurch geführt ist.

5. Verbundfolie nach Anspruch 1 oder 2, dadurch gekennzeichnet, daß die Deckfolie (DF) in einem Abstand (x) vor dem Längsrand der Trägerfolie (TF) endet.
